# EUROPEAN PATENT APPLICATION

(11) **EP 4 804 523 A1**
(43) Date of publication of application: **09.09.2026**
(21) Application number: 24887368.9
(22) Date of filing: 31.05.2024
(51) Int. Cl.: H04N 19/159

(54) **INTRA-FRAME PREDICTION METHOD AND DEVICE AND STORAGE MEDIUM**

(30) Priority: 10.11.2023 CN 202311512111
(71) Applicant: ZTE Corporation, Shenzhen, Guangdong 518057 (CN)
(72) Inventor: JIA, Menghu, Shenzhen, Guangdong 518057 (CN); GAO, Ying, Shenzhen, Guangdong 518057 (CN); BAI, Yaxian, Shenzhen, Guangdong 518057 (CN); XIE, Shaowei, Shenzhen, Guangdong 518057 (CN); HUANG, Cheng, Shenzhen, Guangdong 518057 (CN)
(74) Representative: Aipex B.V.
(86) International application number: PCT/CN2024/096571
(87) International publication number: WO 2025/097744

(57) **Abstract**

Provided are an intra prediction method, a device, and a storage medium. The intra prediction method includes: constructing, based on a current template type and template correlations of a current sub-partition in a coding unit, a target intra prediction mode (IPM) candidate set corresponding to the current sub-partition; and performing intra prediction on the current sub-partition based on an IPM in the target IPM candidate set.

## Description

### TECHNICAL FIELD

The present application relates to the field of communication technologies, for example, an intra prediction method, a device, and a storage medium.

### BACKGROUND

In a Geometric Partitioning Mode (GPM), a coding unit is partitioned into at least two sub-partitions, each sub-partition is independently predicted, and all the sub-partitions are combined to jointly form a prediction of the coding unit. For any sub-partition, inter prediction, intra prediction, an intra block copy (IBC) mode, or another prediction mode may be used for predictive coding. In the case where an intra mode is determined to be used, an intra mode candidate list needs to be constructed, and then an optimal candidate intra prediction mode (IPM) is selected. However, different sub-partitions correspond to different template types. Therefore, when the intra mode candidate list includes intra modes derived based on templates, such as template-based intra mode derivation (TIMD) or decoder-side intra mode derivation (DIMD), a mode derived from an L-shaped template (that is, a mode derived from an L-shaped template region on the upper and left sides of the coding unit (Mode_L)) is not suitable for use as a candidate for all sub-partitions. A mode derived from a left template (that is, a mode derived from a template region on the left side of the coding unit (Mode_Hor)) is not suitable for use as a candidate for a sub-partition with only an above template region (that is, a template region on the upper side of the coding unit). A mode derived from an above template (that is, a mode derived from the template region on the upper side of the coding unit (Mode_Ver)) is not suitable for use as a candidate for a sub-partition with only a left template region (that is, the template region on the left side of the coding unit).

Additionally, if the vertical mode (Mode_Ver) and the horizontal mode (Mode_Hor) of TIMD or DIMD are both added to a candidate list for a sub-partition, mode redundancy and an enlarged index range are caused, resulting in a waste of code words. Meanwhile, for sub-partitions with different template regions, prediction modes derived from different template regions are selected as final prediction modes with different probabilities, and a fixed sequence of such modes in the candidate list cannot satisfy an optimal sequence for different sub-partitions.

### SUMMARY

Embodiments of the present application provide an intra prediction method, a device, and a storage medium, thereby effectively selecting an IPM, reducing a consumption of code words, and improving coding efficiency.

Embodiments of the present application provide an intra prediction method. The intra prediction method includes: constructing, based on a current template type and template correlations of a current sub-partition in a coding unit, a target IPM candidate set corresponding to the current sub-partition; and performing intra prediction on the current sub-partition based on an IPM in the target IPM candidate set.

Embodiments of the present application provide a communication device. The communication device includes a memory and at least one processor.

The memory is configured to store at least one program. The at least one program, when executed by the at least one processor, causes the at least one processor to perform the intra prediction method of any preceding embodiment.

Embodiments of the present application provide a storage medium storing a computer program which, when executed by a processor, causes the processor to perform the intra prediction method of any preceding embodiment.

### BRIEF DESCRIPTION OF DRAWINGS

FIG. 1 is a diagram illustrating a configuration of a hybrid coding framework according to the related art.
FIG. 2 is a diagram illustrating the partitioning of sub-partitions according to the related art.
FIG. 3 is a diagram illustrating configurations of an angle parameter and an offset parameter according to the related art.
FIG. 4 is a flowchart of an intra prediction method according to an embodiment of the present application.
FIG. 5 is a flowchart of implementation of predictive coding in a GPM according to an embodiment of the present application.
FIG. 6 is a flowchart of implementation of predictive decoding in a GPM according to an embodiment of the present application.
FIG. 7 is a block diagram of a prediction apparatus according to an embodiment of the present application.
FIG. 8 is a diagram illustrating the structure of a communication device according to an embodiment of the present application.

### DETAILED DESCRIPTION

Embodiments of the present application are described hereinafter in conjunction with the drawings. The present application is described hereinafter in conjunction with embodiments and the drawings. The examples illustrated are intended to explain the present application.

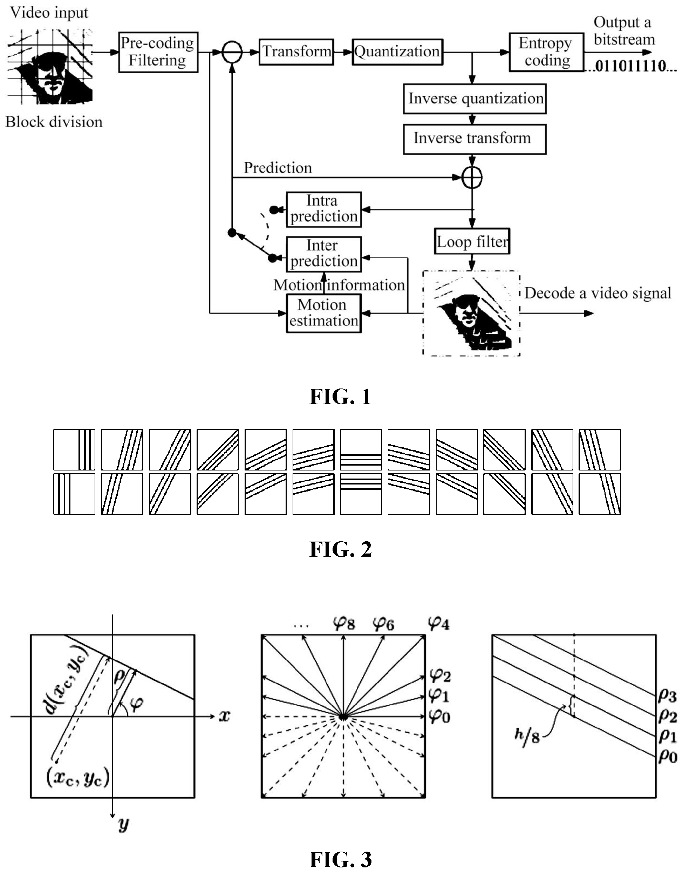

The implementation of embodiments of the present application is based on a hybrid coding framework. FIG. 1 is a diagram illustrating a configuration of a hybrid coding framework according to the related art. As shown in FIG. 1, the coding framework in a new-generation video coding standard (H.266/Versatile Video Coding (VVC)) includes intra prediction, inter prediction, transform, quantization, loop filter, and entropy coding modules.

An overall framework process of an encoding end is described below.
(1) An input video is divided into frames and blocks: A frame is divided into multiple coding tree units (CTUs), and each CTU may be divided into four coding units (CUs) of the same size according to a quadtree or may be recursively divided into CUs of different sizes according to multiple type trees (MTTs), that is, binary or ternary tree structures.
(2) The divided blocks are sent to an intra/inter prediction module to undergo predictive coding. The intra prediction module is used for removing a spatial correlation of an image and configured to predict a current pixel block using information about a reconstructed block after coding to remove spatial redundancy. The inter prediction module is used for removing a temporal correlation of the image and configured to acquire motion information of each block using a coded image as a reference image of a current frame to remove temporal redundancy.
(3) An obtained predicted value is subtracted from an original block to obtain a residual, and the residual is transformed and quantized to remove a frequency domain correlation and perform lossy compression on data. The image is transformed from a spatial domain signal to a frequency domain signal through transform coding, thereby concentrating energy in a low-frequency region. The quantization module can reduce a dynamic range of image coding.
(4) The entropy coding is performed on all coding parameters and a residual to form a binary stream for storage or transmission. Output data of the entropy coding module is a compressed bitstream of the original video.
(5) The predicted value is added to the residual subjected to inverse quantization and inverse transform to obtain a block reconstruction value, and a reconstructed image is formed.
(6) The reconstructed image is filtered by the loop filter and stored in an image buffer to be used as a reference image in the future. Loop filtering technologies in H.266/VVC include luma mapping with chroma scaling (LMCS), deblocking filter (DBF), sample adaptive offset (SAO), and adaptive loop filter (ALF). The LMCS improves compression efficiency by reallocating code words to information within a dynamic range. The DBF is used for reducing the blocking effect. The SAO is used for reducing ringing artifacts. The ALF can reduce decoding errors.

An overall framework process of a decoding end is described below.

(1) A bitstream is parsed, a prediction mode is acquired, and a predicted value is obtained. (2) The inverse transform and the inverse quantization are performed on a residual obtained from the parsed bitstream. (3) The predicted value is added to the residual subjected to the inverse quantization and the inverse transform to obtain a block reconstruction value, and a reconstructed image is formed. (4) The reconstructed image is filtered by the loop filter and stored in an image buffer to be used as a reference image in the future.

In the case where an image structure is relatively complex, simple division according to the quadtree or MTTs cannot effectively achieve the accurate division of the image content. Therefore, a GPM is proposed to further partition a rectangular CU into two sub-partitions. The two sub-partitions are independently coded through inter prediction to obtain their respective reconstruction values. The reconstruction values of the two sub-partitions are combined to form a reconstruction value of the CU.

FIG. 2 is a diagram illustrating the partitioning of sub-partitions according to the related art. FIG. 3 is a diagram illustrating configurations of an angle parameter and an offset parameter according to the related art. As shown in FIG. 2, in the GPM, the CU is partitioned into two parts by a geometrically positioned straight line. A position of a partition line is mathematically obtained according to an angle parameter ψ and an offset parameter ρ of a particular partition, as shown in the left figure in FIG. 3.

In the GPM of the VVC standard, 360° may be quantized at unequal intervals to form 24 angles, as shown in the middle figure in FIG. 3; at each angle, at most four offsets exist, as shown in the right figure in FIG. 3, so that 64 partitioning modes are formed in total.

Each partition after CU partitioning contains separate motion information. Each partition only allows uni-directional prediction, that is, each partition only has one motion vector and one reference index. This constraint ensures that each CU is the same as one subjected to conventional bi-directional prediction, that is, each CU only requires two motion vectors and two reference frame indices. To simplify motion information coding, motion information of two partitions in the GPM is coded in a merge mode, and a candidate list in the GPM is derived from the conventional merge mode.

After the VVC standard was proposed, a new exploration platform, Enhanced Compression Model (ECM), was proposed. The ECM follows the coding framework in H.266/VVC and extends and adds a large number of new prediction technologies.

During the exploration of new-generation video coding standards, GPM with intra and inter prediction (GPM with Intra) was proposed to extend the GPM. The GPM with Intra is consistent with the GPM in that the CU is partitioned into two sub-partitions by a geometrically positioned straight line, and each sub-partition is independently subjected to predictive coding. The GPM with Intra is different from the GPM in that the sub-partitions support intra coding. Specifically, for any sub-partition, an inter coding mode or an intra coding mode may be selected. The inter coding mode is the same as the GPM. If the intra coding mode is selected, an IPM candidate list with a size of 3 is constructed, and an intra mode is selected therefrom as a prediction mode for the current sub-partition. Finally, like those in the GPM, a sub-partition subjected to intra prediction and a sub-partition subjected to inter prediction are combined to obtain a final prediction of the CU.

After multiple technical explorations, the following method for constructing an IPM list for a sub-partition in the GPM with Intra is formed: a parallel mode relative to a geometric partition line, a TIMD mode, a DIMD mode, a perpendicular mode relative to the geometric partition line, an intra mode of a neighbor block selected according to a partition angle, and a planar mode. The IPM list has a fixed size of 3, and a duplicate mode is pruned during construction.

At the Z-th meeting of the Joint Video Experts Team (JVET), the GPM was further extended to spatial GPM (SGPM), and two sub-partitions in the SGPM both adopt intra prediction. One IPM list is constructed for each of the two sub-partitions in the SGPM, one intra mode is selected from each IPM list for prediction, and predictions of the two sub-partitions are combined to obtain a final prediction of the CU. After explorations in multiple meetings, the construction of IPMs in the SGPM is gradually developed into the following construction method: a TIMD vertical mode (TIMD-Ver), a TIMD horizontal mode (TIMD-Hor), a parallel mode relative to a geometric partition line, a DIMD mode, an intra mode of a neighbor block selected according to a partition angle, a perpendicular mode relative to the geometric partition line, and a planar mode. The IPM list also has a fixed size of 3, and a duplicate mode is pruned during construction.

At the AC-th meeting of the JVET, IBC was introduced into the GPM, that is, IBC-GPM. Two sub-partitions in the IBC-GPM may adopt an IBC mode and an IPM to jointly form a prediction process of the CU. For a sub-partition subjected to intra prediction in the IBC-GPM, the construction of IPMs is consistent with the construction process of the IPMs in the GPM with Intra.

During IPM construction of the above three GPMs including intra prediction, sources of intra mode candidates are basically consistent and include the intra modes (TIMD and DIMD) derived based on template information, the parallel and perpendicular modes relative to the geometric partition line, the intra mode of the neighbor block, and the planar mode. Due to different geometric partition positions, candidate sources of different sub-partitions are also different, and therefore IPMs need to be constructed based on the partition angle. During construction of the parallel and perpendicular modes relative to the geometric partition line and the intra mode of the neighbor block selected according to the partition angle, an effect of the partition angle on different sub-partitions has been considered. However, for mode candidates derived based on template information, the effect of the partition angle on a sub-partition is not considered. Different sub-partitions have different template regions, and different intra modes may be derived from different template regions. Therefore, for a different sub-partition, a mode with a large correlation to a template region of the sub-partition is to be selected as a candidate from the intra modes derived based on template information.

In the SGPM, if two modes derived from two templates (a left template and an above template), TIMD-Hor and TIMD-Ver, are both added to the IPM list, this method causes mode redundancy to a sub-partition with a different partition angle, resulting in a waste of code words. For example, for a sub-partition with only a left template region, the IPMs should not include a TIMD-Ver mode candidate derived from the above template, or the TIMD-Ver mode should be selected at a relatively low priority. Therefore, corresponding intra modes are to be adaptively selected based on a template region of a sub-partition and sorted based on correlations to the template region.

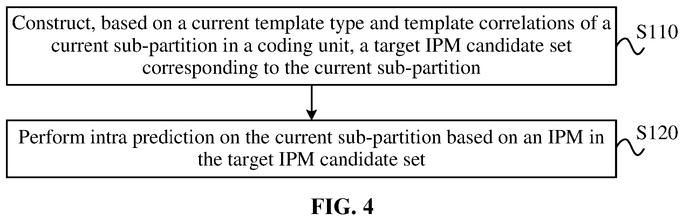

In an embodiment, FIG. 4 is a flowchart of an intra prediction method according to an embodiment of the present application. This embodiment may be implemented by an encoding end or a decoding end. As shown in FIG. 4, this embodiment includes S110 and S120.

In S110, based on a current template type and template correlations of a current sub-partition in a coding unit, a target IPM candidate set corresponding to the current sub-partition is constructed.

In S120, intra prediction is performed on the current sub-partition based on an IPM in the target IPM candidate set.

In this embodiment, based on the current template type and the template correlations of the current sub-partition in the coding unit, appropriate IPMs may be adaptively selected from multiple IPMs derived based on template information and added to the target IPM candidate set; and one IPM is selected from the target IPM candidate set to perform the intra prediction on the current sub-partition, thereby effectively selecting an IPM, reducing a consumption of code words, and improving coding efficiency.

In an embodiment, based on the current template type and the template correlations of the current sub-partition in the coding unit, constructing the target IPM candidate set corresponding to the current sub-partition includes: acquiring a first derived IPM set derived based on template information; determining a template correlation between a template type corresponding to each derived IPM in the first derived IPM set and the current template type of the current sub-partition in the coding unit; selecting, based on the template correlation, a candidate IPM from the first derived IPM set; and constructing, based on the candidate IPM, the target IPM candidate set corresponding to the current sub-partition.

In an example, the first derived IPM set includes all the IPMs derived based on template information. The template type corresponding to each derived IPM in the first derived IPM set is compared with the current template type of the current sub-partition to determine the template correlation therebetween, that is, the closer the template types, the greater the corresponding template correlation. Then, based on the template correlation, at least one derived IPM is selected from the first derived IPM set as the corresponding candidate IPM. Finally, all candidate IPMs form the target IPM candidate set corresponding to the current sub-partition.

In an embodiment, the first derived IPM set includes at least one of a first-type IPM, a second-type IPM, or a third-type IPM; the first-type IPM is a prediction mode derived from a first template region and a second template region of the coding unit; the second-type IPM is a prediction mode derived from the first template region of the coding unit; and the third-type IPM is a prediction mode derived from the second template region of the coding unit.

In an embodiment, selecting, based on the template correlation, the candidate IPM from the first derived IPM set includes the following:
In response to the current template type being a first-type template, the candidate IPM includes at least one of the first-type IPM, the second-type IPM, or the third-type IPM.

In response to the current template type being a second-type template, the candidate IPM includes at least one of the first-type IPM or the second-type IPM.

In response to the current template type being a third-type template, the candidate IPM includes at least one of the first-type IPM or the third-type IPM.

For example, the first-type template is an L-shaped template, the second-type template is a left template, and the third-type template is an above template. Correspondingly, the first-type IPM is dMode, the second-type IPM is dMode-Hor, and the third-type IPM is dMode-Ver. In an example, in the case where the current template type is the L-shaped template, the corresponding candidate IPM may include at least one of dMode, dMode-Hor, or dMode-Ver. In an example, in the case where the current template type is the left template, the corresponding candidate IPM may include at least one of dMode or dMode-Hor. In an example, in the case where the current template type is the above template, the corresponding candidate IPM may include at least one of dMode or dMode-Ver.

In an embodiment, based on the current template type and the template correlations of the current sub-partition in the coding unit, constructing the target IPM candidate set corresponding to the current sub-partition includes: acquiring a second derived IPM set from a pre-created initial IPM candidate set; determining a template correlation between a template type corresponding to each derived IPM in the second derived IPM set and the current template type of the current sub-partition in the coding unit; and sorting, based on the template correlation, all derived IPMs in the second derived IPM set to obtain the target IPM candidate set corresponding to the current sub-partition.

In an example, the second derived IPM set refers to a set of all IPMs derived based on template information in the initial IPM candidate set. In an example, if the pre-created initial IPM candidate set includes all the IPMs derived based on template information, the second derived IPM set and the first derived IPM set may include the same IPMs.

In an embodiment, the second derived IPM set includes at least one of the first-type IPM, the second-type IPM, or the third-type IPM; the first-type IPM is the prediction mode derived from the first template region and the second template region of the coding unit; the second-type IPM is the prediction mode derived from the first template region of the coding unit; and the third-type IPM is the prediction mode derived from the second template region of the coding unit.

In an embodiment, in response to the current template type being the first-type template, determining the template correlation between the template type corresponding to each derived IPM in the second derived IPM set and the current template type of the current sub-partition in the coding unit includes: determining respective template region areas occupied by the second template region and a third template region in the first-type template; and determining, based on the template region areas, a template correlation between the second-type template and the current template type and a template correlation between the third-type template and the current template type.

In an example, the first-type template is a combination of the second-type template and the third-type template. In an example, a magnitude of the template correlation between the second-type template and the current template type is positively correlated to a template region area of the first-type template occupied by the second template region corresponding to the second-type template; similarly, a magnitude of the template correlation between the third-type template and the current template type is positively correlated to a template region area of the first-type template occupied by the third template region corresponding to the third-type template.

In an embodiment, sorting, based on the template correlation, all the derived IPMs in the second derived IPM set to obtain the target IPM candidate set corresponding to the current sub-partition includes: sorting, based on the template correlation, all the derived IPMs in the second derived IPM set in descending order to obtain the target IPM candidate set corresponding to the current sub-partition. All the derived IPMs in the second derived IPM set are sorted in descending order based on the template correlation so that a derived IPM with a largest template correlation is at the first position in the target IPM candidate set, a derived IPM with a second largest template correlation is at the second position in the target IPM candidate set, and so on, to obtain the corresponding target IPM candidate set.

In the following four embodiments, the construction of a target IPM candidate set during coding and decoding is described by using an example in which a first-type template is an L-shaped template, a second-type template is a left template, a third-type template is an above template, a first-type IPM is dMode, a second-type IPM is dMode-Hor, and a third-type IPM is dMode-Ver.

### Embodiment one

This embodiment provides a video coding method applied to an apparatus for coding a video.

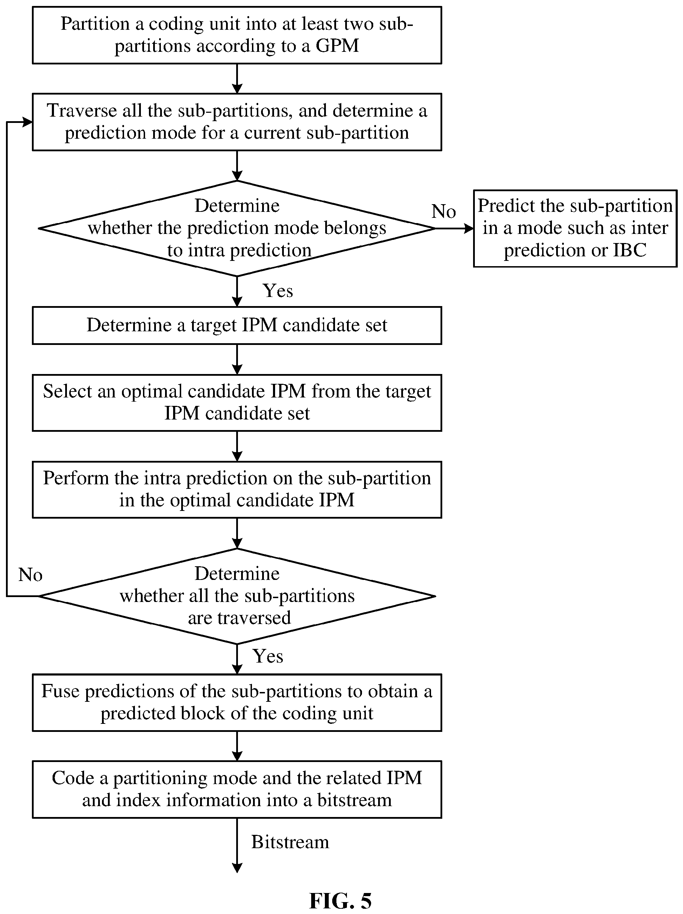

A coding unit obtained through division of an image in the video is further partitioned into two or more sub-partitions. For each sub-partition, the target IPM candidate set is adaptively constructed based on a current template type of the sub-partition, and one IPM is selected using an index from the IPM candidate set as a prediction mode corresponding to the sub-partition. FIG. 5 is a flowchart of implementation of predictive coding in a GPM according to an embodiment of the present application. As shown in FIG. 5, operations of the predictive coding in the GPM are described below.

In S1, the coding unit is partitioned into at least two sub-partitions according to the GPM.

In S2, all the sub-partitions are traversed, and a prediction mode for a current sub-partition is determined.

In S3, it is determined whether the prediction mode belongs to intra prediction. If not, S4 is performed. If so, S5 is performed.

In S4, the sub-partition is predicted in a mode such as inter prediction or IBC. Then, S8 is performed.

In S5, a target IPM candidate set is determined.

The target IPM candidate set includes, but is not limited to, a mode list. IPMs included in the target IPM candidate set are each selected from a vertical mode relative to a partition angle, a horizontal mode relative to the partition angle, models (DIMD and TIMD) derived based on template information and derived modes thereof (DIMD-Hor, DIMD-Ver, TIMD-Hor, and TIMD-Ver), a mode of a spatial neighbor block, a planar mode, etc. Depending on a template type of the sub-partition, the IPMs are adaptively selected from IPMs derived based on template information and derived modes thereof.

In S6, an optimal candidate IPM is selected from the target IPM candidate set.

In S7, the intra prediction is performed on the sub-partition in the optimal candidate IPM.

In S8, it is determined whether all the sub-partitions are traversed. If so, S9 is performed. If not, S2 is performed.

In S9, predictions of the sub-partitions are fused to obtain a predicted block of the coding unit.

In S10, a partitioning mode and the related IPM and index information are coded into a bitstream.

The derivation of IPMs based on template information in S5 includes multiple cases. Three commonly used template types include the L-shaped template (an L-shaped template formed by reconstructed pixels on the upper and left sides of the coding unit where the sub-partition is located), the left template (a template formed by reconstructed pixels on the left side of the coding unit where the sub-partition is located), and the above template (a template formed by reconstructed pixels on the upper side of the coding unit where the sub-partition is located). The IPMs (such as DIMD and TIMD) derived from the above three types of templates are of three types: dMode (derived from the L-shaped template, such as DIMD and TIMD), dMode-Hor (derived from the left template, such as DIMD-Hor and TIMD-Hor), and dMode-Ver (derived from the above template, such as DIMD-Ver and TIMD-Ver). However, the IPMs include, but are not limited to, the above commonly used modes.

Depending on the template type of the sub-partition, the IPMs derived from the above three template types are adaptively added, in descending order of template correlations, into the target IPM candidate set corresponding to the sub-partition, which includes, but is not limited to, the implementations below.

### Optional implementation one

In the case where the current template type of the current sub-partition is the L-shaped template, dMode is used as a candidate mode for the current sub-partition and added into the target IPM candidate set.

In the case where the current template type of the current sub-partition is the left template, dMode-Hor is used as a candidate mode for the current sub-partition and added into the target IPM candidate set.

In the case where the current template type of the current sub-partition is the above template, dMode-Ver is used as a candidate mode for the current sub-partition and added into the target IPM candidate set.

### Optional implementation two

In the case where the current template type of the current sub-partition is the L-shaped template, dMode, dMode-Hor, or dMode-Ver is used as a candidate IPM for the current sub-partition and added into the target IPM candidate set.

In the case where the current template type of the current sub-partition is the left template, dMode-Hor is used as a candidate IPM for the current sub-partition and added into the target IPM candidate set.

In the case where the current template type of the current sub-partition is the above template, dMode-Ver is used as a candidate IPM for the current sub-partition and added into the target IPM candidate set.

### Optional implementation three

In the case where the current template type of the current sub-partition is the L-shaped template, dMode-Hor or dMode-Ver is used as a candidate IPM for the current sub-partition and added into the target IPM candidate set.

In the case where the current template type of the current sub-partition is the left template, dMode-Hor is used as a candidate IPM for the current sub-partition and added into the target IPM candidate set.

In the case where the current template type of the current sub-partition is the above template, dMode-Ver is used as a candidate IPM for the current sub-partition and added into the target IPM candidate set.

### Optional implementation four

In the case where the current template type of the current sub-partition is the L-shaped template, dMode, dMode-Hor, or dMode-Ver is used as a candidate IPM for the current sub-partition and added into the target IPM candidate set.

In the case where the current template type of the current sub-partition is the left template, dMode-Hor or dMode is used as a candidate IPM for the current sub-partition and added into the target IPM candidate set.

In the case where the current template type of the current sub-partition is the above template, dMode-Ver or dMode is used as a candidate IPM for the current sub-partition and added into the target IPM candidate set.

Additionally, an additional higher-layer syntax element may be added into any one or more of a video parameter set (VPS), a sequence parameter set (SPS), a picture parameter set (PPS), an adaptive parameter set (APS), a slice header (SH), a picture header (PH), or supplemental enhancement information (SEI), where the additional higher-layer syntax element identifies whether the method for adaptively constructing the IPM candidate set based on the template type is enabled or indicates an index that specifies which construction method is used. Alternatively, a CU-level flag may be added at the CU level to identify whether the method for adaptively constructing the IPM candidate set based on the template type is enabled for the current coding unit or indicate an index that specifies which construction method is used. If the syntax element is present, such syntax elements need to be transmitted in the bitstream to a decoding end.

### Embodiment two

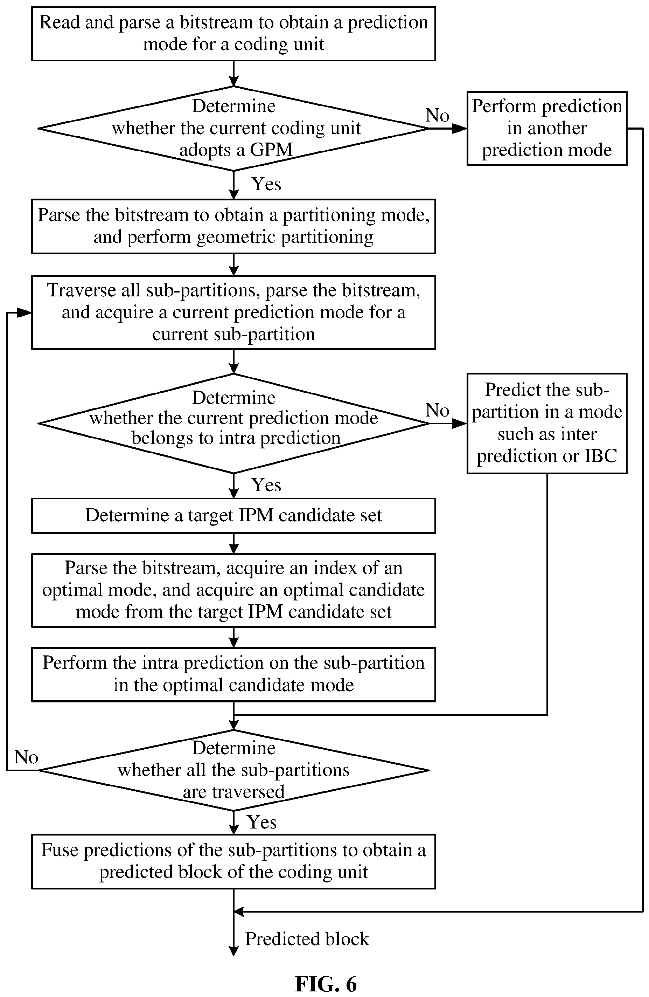

This embodiment provides a video decoding method applied to an apparatus or application for decoding a video. This embodiment corresponds to embodiment one. FIG. 6 is a flowchart of implementation of predictive decoding in a GPM according to an embodiment of the present application. As shown in FIG. 6, operations of the predictive decoding in the GPM are described below.

In S1, a bitstream is read and parsed to obtain a prediction mode for a coding unit.

For example, information such as prediction parameters and residue coefficients of the coding unit may be acquired.

In S2, it is determined whether the current coding unit adopts the GPM. If not, S3 is performed. If so, S4 is performed.

In S3, prediction is performed in another prediction mode.

In S4, the bitstream is parsed to obtain a partitioning mode, and geometric partitioning is performed.

In S5, all sub-partitions are traversed, the bitstream is parsed, and a current prediction mode for a current sub-partition is acquired.

In S6, it is determined whether the current prediction mode belongs to an intra prediction mode. If not, S7 is performed. If so, S8 is performed.

In S7, the sub-partition is predicted in a mode such as inter prediction or IBC. Then, S11 is performed.

In S8, a target IPM candidate set is determined.

The target IPM candidate set includes, but is not limited to, a mode list. IPMs included in the target IPM candidate set are each selected from a vertical mode relative to a partition angle, a horizontal mode relative to the partition angle, models (DIMD and TIMD) derived based on template information and derived modes thereof (DIMD-Hor, DIMD-Ver, TIMD-Hor, and TIMD-Ver), a mode of a spatial neighbor block, a planar mode, etc. Depending on a template type of the sub-partition, the IPMs are adaptively selected from IPMs derived based on template information and derived modes thereof.

In S9, the bitstream is parsed, an index of an optimal mode is acquired, and an optimal candidate mode is acquired from the target IPM candidate set.

In S10, the intra prediction is performed on the sub-partition in the optimal candidate mode.

In S11, it is determined whether all the sub-partitions are traversed. If so, S12 is performed. If not, S5 is performed.

In S12, predictions of the sub-partitions are fused to obtain a predicted block of the coding unit.

In S8, specific implementations in which the IPMs derived based on template information are adaptively selected based on the template type of the sub-partition are the same as those in embodiment one.

In S8, if a syntax element is present in any one or more of a VPS, an SPS, a PPS, an APS, an SH, or SEI to identify whether the method for adaptively constructing the IPM candidate set based on the template type is enabled or indicate an index that specifies which construction method is used or if a CU-level flag is present at the CU level to identify whether the method for adaptively constructing the IPM candidate set based on the template type is enabled for the current coding unit or indicate an index that specifies which construction method is used, the syntax element needs to be parsed, and then the candidate list is constructed according to the syntax element.

### Embodiment three

This embodiment provides a video coding method applied to an apparatus for coding a video.

A coding unit obtained through division of an image in the video is further partitioned into two or more sub-partitions. IPMs derived based on template information in the target IPM candidate set of each sub-partition are adaptively sorted based on template correlations, and one IPM is selected using an index from the target IPM candidate set as a prediction mode corresponding to the sub-partition. Operations are described below.

In S1, a GPM is determined, and the coding unit is partitioned into at least two sub-partitions.

In S2, all the sub-partitions are traversed, and a prediction mode for a current sub-partition is determined.

In S3, it is determined whether the prediction mode belongs to intra prediction. If not, S4 is performed. If so, S5 is performed.

In S4, the sub-partition is predicted in a mode such as inter prediction or IBC. Then, S8 is performed.

In S5, a target IPM candidate set is determined.

The target IPM candidate set includes, but is not limited to, a mode list. IPMs included in the target IPM candidate set are each selected from a vertical mode relative to a partition angle, a horizontal mode relative to the partition angle, models (DIMD and TIMD) derived based on template information and derived modes thereof (DIMD-Hor, DIMD-Ver, TIMD-Hor, and TIMD-Ver), a mode of a spatial neighbor block, a planar mode, etc. Depending on a template type of the sub-partition, the IPMs derived based on template information and derived modes thereof in the candidate set are adaptively sorted in descending order of template correlations.

In S6, an optimal candidate IPM is selected from the target IPM candidate set.

In S7, the intra prediction is performed on the sub-partition in the optimal candidate IPM.

In S8, it is determined whether all the sub-partitions are traversed. If so, S9 is performed. If not, S2 is performed.

In S9, predictions of the sub-partitions are fused to obtain a predicted block of the coding unit.

In S10, a partitioning mode and the related IPM and index information are coded into a bitstream.

The derivation of IPMs based on template information in S5 includes multiple cases. Three commonly used template types include the L-shaped template (an L-shaped template formed by reconstructed pixels on the upper and left sides of the coding unit where the sub-partition is located), the left template (a template formed by reconstructed pixels on the left side of the coding unit where the sub-partition is located), and the above template (a template formed by reconstructed pixels on the upper side of the coding unit where the sub-partition is located). The IPMs (such as DIMD and TIMD) derived from the above three types of templates are of three types: dMode (derived from the L-shaped template, such as DIMD and TIMD), dMode-Hor (derived from the left template, such as DIMD-Hor and TIMD-Hor), and dMode-Ver (derived from the above template, such as DIMD-Ver and TIMD-Ver). However, the IPMs include, but are not limited to, the above commonly used modes. After modes (including, but not limited to, several modes) are added into an initial IPM candidate set by a certain method, all derived modes derived based on template information are selected from the initial IPM candidate set to obtain a corresponding second derived IPM set, and all IPMs in the second derived IPM set are adaptively sorted in descending order based on the template correlations of the sub-partition to obtain the target IPM candidate set. Specific implementations include, but are not limited to, the implementations below.

In an example, for the left template, the corresponding target IPM candidate set includes, in descending order of template correlations, one of: dMode-Hor, dMode, and dMode-Ver; dMode-Hor and dMode-Ver; or dMode-Hor and dMode.

For the above template, the corresponding target IPM candidate set includes, in descending order of template correlations, one of: dMode-Ver, dMode, and dMode-Hor; dMode-Ver and dMode-Hor; or dMode-Ver and dMode.

For the L-shaped template, the corresponding target IPM candidate set includes, in descending order of template correlations, one of: dMode, dMode-Hor, and dMode-Ver; dMode, dMode-Ver, and dMode-Hor; dMode-Hor and dMode-Ver; dMode-Ver and dMode-Hor; dMode and dMode-Hor; or dMode and dMode-Ver.

### Optional implementation one

In the case where the second derived IPM set includes dMode, dMode-Hor, and dMode-Ver, the current template type of the current sub-partition is the L-shaped template, and in the L-shaped template, a template region area occupied by the left template is greater than a template region area occupied by the above template, the IPMs are added into the target IPM candidate set in the following order: dMode, dMode-Hor, and dMode-Ver.

In the case where the second derived IPM set includes dMode, dMode-Hor, and dMode-Ver, the current template type of the current sub-partition is the L-shaped template, and in the L-shaped template, the template region area occupied by the left template is less than the template region area occupied by the above template, the IPMs are added into the target IPM candidate set in the following order: dMode, dMode-Ver, and dMode-Hor.

In the case where the second derived IPM set includes dMode, dMode-Hor, and dMode-Ver, and the current template type of the current sub-partition is the left template, the IPMs are added into the target IPM candidate set in the following order: dMode-Hor, dMode, and dMode-Ver.

In the case where the second derived IPM set includes dMode, dMode-Hor, and dMode-Ver, and the current template type of the current sub-partition is the above template, the IPMs are added into the target IPM candidate set in the following order: dMode-Ver, dMode, and dMode-Hor.

### Optional implementation two

In the case where the second derived IPM set includes dMode-Hor and dMode-Ver, the current template type of the current sub-partition is the L-shaped template, and in the L-shaped template, a template region area occupied by the left template is greater than a template region area occupied by the above template, the IPMs are added into the target IPM candidate set in the following order: dMode-Hor and dMode-Ver.

In the case where the second derived IPM set includes dMode-Hor and dMode-Ver, the current template type of the current sub-partition is the L-shaped template, and in the L-shaped template, the template region area occupied by the left template is less than the template region area occupied by the above template, the IPMs are added into the target IPM candidate set in the following order: dMode-Ver and dMode-Hor.

In the case where the second derived IPM set includes dMode-Hor and dMode-Ver, and the current template type of the current sub-partition is the left template, the IPMs are added into the target IPM candidate set in the following order: dMode-Hor and dMode-Ver.

In the case where the second derived IPM set includes dMode-Hor and dMode-Ver, and the current template type of the current sub-partition is the above template, the IPMs are added into the target IPM candidate set in the following order: dMode-Ver and dMode-Hor.

### Optional implementation three

In the case where the second derived IPM set includes dMode, dMode-Hor, and dMode-Ver, the current template type of the current sub-partition is the L-shaped template, and in the L-shaped template, a template region area occupied by the left template is greater than a template region area occupied by the above template, the IPMs are added into the target IPM candidate set in the following order: dMode, dMode-Hor, and dMode-Ver.

In the case where the second derived IPM set includes dMode, dMode-Hor, and dMode-Ver, the current template type of the current sub-partition is the L-shaped template, and in the L-shaped template, the template region area occupied by the left template is less than the template region area occupied by the above template, the IPMs are added into the target IPM candidate set in the following order: dMode, dMode-Ver, and dMode-Hor.

In the case where the second derived IPM set includes dMode-Hor and dMode-Ver, and the current template type of the current sub-partition is the left template, the IPMs are added into the target IPM candidate set in the following order: dMode-Hor and dMode-Ver.

In the case where the second derived IPM set includes dMode-Hor and dMode-Ver, and the current template type of the current sub-partition is the above template, the IPMs are added into the target IPM candidate set in the following order: dMode-Ver and dMode-Hor.

### Optional implementation four

In the case where the second derived IPM set includes dMode-Hor and dMode-Ver, the current template type of the current sub-partition is the L-shaped template, and in the L-shaped template, a template region area occupied by the left template is greater than a template region area occupied by the above template, the IPMs are added into the target IPM candidate set in the following order: dMode-Hor and dMode-Ver.

In the case where the second derived IPM set includes dMode-Hor and dMode-Ver, the current template type of the current sub-partition is the L-shaped template, and in the L-shaped template, the template region area occupied by the left template is less than the template region area occupied by the above template, the IPMs are added into the target IPM candidate set in the following order: dMode-Ver and dMode-Hor.

In the case where the second derived IPM set includes dMode, dMode-Hor, and dMode-Ver, and the current template type of the current sub-partition is the left template, the IPMs are added into the target IPM candidate set in the following order: dMode-Hor, dMode, and dMode-Ver.

In the case where the second derived IPM set includes dMode, dMode-Hor, and dMode-Ver, and the current template type of the current sub-partition is the above template, the IPMs are added into the target IPM candidate set in the following order: dMode-Ver, dMode, and dMode-Hor.

### Optional implementation five

In the case where the second derived IPM set includes dMode, dMode-Hor, and dMode-Ver, the current template type of the current sub-partition is the L-shaped template, and in the L-shaped template, a template region area occupied by the left template is greater than a template region area occupied by the above template, the IPMs are added into the target IPM candidate set in the following order: dMode, dMode-Hor, and dMode-Ver.

In the case where the second derived IPM set includes dMode, dMode-Hor, and dMode-Ver, the current template type of the current sub-partition is the L-shaped template, and in the L-shaped template, the template region area occupied by the left template is less than the template region area occupied by the above template, the IPMs are added into the target IPM candidate set in the following order: dMode, dMode-Ver, and dMode-Hor.

In the case where the second derived IPM set includes dMode and dMode-Hor, and the current template type of the current sub-partition is the left template, the IPMs are added into the target IPM candidate set in the following order: dMode-Hor and dMode.

In the case where the second derived IPM set includes dMode and dMode-Ver, and the current template type of the current sub-partition is the above template, the IPMs are added into the target IPM candidate set in the following order: dMode-Ver and dMode.

### Optional implementation six

In the case where the second derived IPM set includes dMode and dMode-Hor, the current template type of the current sub-partition is the L-shaped template, and in the L-shaped template, a template region area occupied by the left template is greater than a template region area occupied by the above template, the IPMs are added into the target IPM candidate set in the following order: dMode and dMode-Hor.

In the case where the second derived IPM set includes dMode and dMode-Ver, the current template type of the current sub-partition is the L-shaped template, and in the L-shaped template, the template region area occupied by the left template is less than the template region area occupied by the above template, the IPMs are added into the target IPM candidate set in the following order: dMode and dMode-Ver.

In the case where the second derived IPM set includes dMode, dMode-Hor, and dMode-Ver, and the current template type of the current sub-partition is the left template, the IPMs are added into the target IPM candidate set in the following order: dMode-Hor, dMode, and dMode-Ver.

In the case where the second derived IPM set includes dMode, dMode-Hor, and dMode-Ver, and the current template type of the current sub-partition is the above template, the IPMs are added into the target IPM candidate set in the following order: dMode-Ver, dMode, and dMode-Hor.

### Optional implementation seven

In the case where the second derived IPM set includes dMode and dMode-Hor, the current template type of the current sub-partition is the L-shaped template, and in the L-shaped template, a template region area occupied by the left template is greater than a template region area occupied by the above template, the IPMs are added into the target IPM candidate set in the following order: dMode and dMode-Hor.

In the case where the second derived IPM set includes dMode and dMode-Ver, the current template type of the current sub-partition is the L-shaped template, and in the L-shaped template, the template region area occupied by the left template is less than the template region area occupied by the above template, the IPMs are added into the target IPM candidate set in the following order: dMode and dMode-Ver.

In the case where the second derived IPM set includes dMode and dMode-Hor, and the current template type of the current sub-partition is the left template, the IPMs are added into the target IPM candidate set in the following order: dMode-Hor and dMode.

In the case where the second derived IPM set includes dMode and dMode-Ver, and the current template type of the current sub-partition is the above template, the IPMs are added into the target IPM candidate set in the following order: dMode-Ver and dMode.

Additionally, an additional higher-layer syntax element may be added into any one or more of a VPS, an SPS, a PPS, an APS, an SH, or SEI to identify whether the template-based adaptive sorting method for an IPM list is enabled or indicate an index that specifies which sorting method is used. Alternatively, a CU-level flag may be added at the CU level to identify whether the template-based adaptive sorting method for an IPM list is enabled for the current coding unit or indicate an index that specifies which sorting method is used. If the syntax element is present, such syntax elements need to be transmitted in the bitstream to a decoding end.

### Embodiment four

This embodiment provides a video decoding method applied to an apparatus or application for decoding a video. This embodiment corresponds to embodiment three. Operations are described below.

In S1, a bitstream is read to obtain information such as prediction parameters and residue coefficients of a coding unit.

In S2, it is determined whether the current coding unit adopts a GPM for further partitioning. If not, S3 is performed. If so, S4 is performed.

In S3, prediction is performed in another prediction mode.

In S4, the bitstream is parsed to obtain a partitioning mode, and partitioning is performed.

In S5, all sub-partitions are traversed, the bitstream is parsed, and a prediction mode for a current sub-partition is acquired.

In S6, it is determined whether the prediction mode belongs to intra prediction. If not, S7 is performed. If so, S8 is performed.

In S7, the sub-partition is predicted in a mode such as inter prediction or IBC. Then, S11 is performed.

In S8, a target IPM candidate set is determined.

The target IPM candidate set includes, but is not limited to, a mode list. IPMs included in the target IPM candidate set are each selected from a vertical mode relative to a partition angle, a horizontal mode relative to the partition angle, models (DIMD and TIMD) derived based on template information and derived modes thereof (DIMD-Hor, DIMD-Ver, TIMD-Hor, and TIMD-Ver), a mode of a spatial neighbor block, a planar mode, etc. Depending on a template type of the sub-partition, IPMs derived based on template information and derived modes thereof in the candidate set are adaptively sorted in descending order of template correlations.

In S9, the bitstream is parsed, an index of an optimal mode is acquired, and an optimal candidate mode is acquired from the target IPM candidate set.

In S10, the intra prediction is performed on the sub-partition in the optimal candidate mode.

In S11, it is determined whether all the sub-partitions are traversed. If so, S12 is performed. If not, S5 is performed.

In S12, predictions of the sub-partitions are fused to obtain a predicted block of the coding unit.

In S8, specific implementations in which the IPMs derived based on template information in the candidate set are adaptively sorted based on the template type of the sub-partition are the same as those in embodiment one.

In S8, if a syntax element is present in any one or more of a VPS, an SPS, a PPS, an APS, an SH, or SEI to identify whether the template type-based adaptive sorting method for the IPM candidate set is enabled or indicate an index that specifies which sorting method is used or if a CU-level flag is present at the CU level to identify whether the template type-based adaptive sorting method for the IPM candidate set is enabled for the current coding unit or indicate an index that specifies which sorting method is used, the syntax element needs to be parsed.

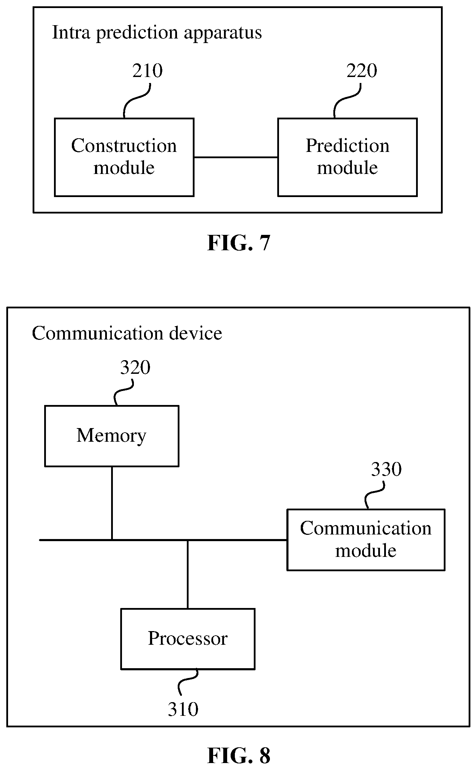

In an embodiment, FIG. 7 is a block diagram of a prediction apparatus according to an embodiment of the present application. This embodiment is applied to an encoding end or a decoding end. As shown in FIG. 7, the prediction apparatus of this embodiment includes a construction module 210 and a prediction module 220.

The construction module 210 is configured to construct, based on a current template type and template correlations of a current sub-partition in a coding unit, a target IPM candidate set corresponding to the current sub-partition.

The prediction module 220 is configured to perform intra prediction on the current sub-partition based on an IPM in the target IPM candidate set.

In an embodiment, the construction module 210 includes a first acquisition unit, a first determination unit, a selecting unit, and a construction unit.

The first acquisition unit is configured to acquire a first derived IPM set derived based on template information. The first determination unit is configured to determine a template correlation between a template type corresponding to each derived IPM in the first derived IPM set and the current template type of the current sub-partition in the coding unit. The selecting unit is configured to select, based on the template correlation, a candidate IPM from the first derived IPM set. The construction unit is configured to construct, based on the candidate IPM, the target IPM candidate set corresponding to the current sub-partition.

In an embodiment, the first derived IPM set includes at least one of a first-type IPM, a second-type IPM, or a third-type IPM; the first-type IPM is a prediction mode derived from a first template region and a second template region of the coding unit; the second-type IPM is a prediction mode derived from the first template region of the coding unit; and the third-type IPM is a prediction mode derived from the second template region of the coding unit.

In an embodiment, the selecting unit is configured to perform the following: in response to the current template type being a first-type template, the candidate IPM includes at least one of the first-type IPM, the second-type IPM, or the third-type IPM; in response to the current template type being a second-type template, the candidate IPM includes at least one of the first-type IPM or the second-type IPM; or in response to the current template type being a third-type template, the candidate IPM includes at least one of the first-type IPM or the third-type IPM.

In an embodiment, the construction module 210 includes a second acquisition unit, a second determination unit, and a sorting construction unit.

The second acquisition unit is configured to acquire a second derived IPM set from a pre-created initial IPM candidate set. The second determination unit is configured to determine a template correlation between a template type corresponding to each derived IPM in the second derived IPM set and the current template type of the current sub-partition in the coding unit. The sorting construction unit is configured to sort, based on the template correlation, all derived IPMs in the second derived IPM set to obtain the target IPM candidate set corresponding to the current sub-partition.

In an embodiment, the second derived IPM set includes at least one of the first-type IPM, the second-type IPM, or the third-type IPM; the first-type IPM is the prediction mode derived from the first template region and the second template region of the coding unit; the second-type IPM is the prediction mode derived from the first template region of the coding unit; and the third-type IPM is the prediction mode derived from the second template region of the coding unit.

In an embodiment, in response to the current template type being the first-type template, the second determination unit includes a first determination subunit and a second determination subunit.

The first determination subunit is configured to determine respective template region areas occupied by the second template region and a third template region in the first-type template. The second determination subunit is configured to determine, based on the template region areas, a template correlation between the second-type template and the current template type and a template correlation between the third-type template and the current template type.

In an embodiment, the sorting construction unit is configured to sort, based on the template correlation, all the derived IPMs in the second derived IPM set in descending order to obtain the target IPM candidate set corresponding to the current sub-partition.

The intra prediction apparatus of this embodiment is configured to perform the intra prediction method of the embodiment shown in FIG. 4. The intra prediction apparatus of this embodiment and the intra prediction method have similar implementation principles and technical effects, which are not repeated here.

In an embodiment, FIG. 8 is a diagram illustrating the structure of a communication device according to an embodiment of the present application. As shown in FIG. 8, the device of the present application includes a processor 310, a memory 320, and a communication module 330. One or more processors 310 may be provided in the device. One processor 310 is shown as an example in FIG. 8. One or more memories 320 may be provided in the device. One memory 320 is shown as an example in FIG. 8. The processor 310, the memory 320, and the communication module 330 in the device may be connected via a bus or in other manners. The connection via a bus is shown as an example in FIG. 8. In this embodiment, the device may be an encoding end or a decoding end.

As a computer-readable storage medium, the memory 320 may be configured to store software programs, computer-executable programs, and modules, such as program instructions/modules (for example, the construction module 210 and the prediction module 220 in the prediction apparatus) corresponding to the device of any embodiment of the present application. The memory 320 may include a program storage region and a data storage region, where the program storage region may store an operating system and an application program required by at least one function, and the data storage region may store data created depending on the use of the device. Additionally, the memory 320 may include a high-speed random-access memory and may further include a non-volatile memory such as at least one magnetic disk memory, a flash memory, or another non-volatile solid-state memory. In some examples, the memory 320 may further include memories remotely disposed relative to the processor 310, and these remote memories may be connected to the device via a network. Examples of the network include, but are not limited to, the Internet, an intranet, a local area network, a mobile communication network, and a combination thereof.

The preceding device may be configured to perform the intra prediction method of any preceding embodiment and has corresponding functions and effects.

An embodiment of the present application provides a storage medium including computer-executable instructions. The computer-executable instructions, when executed by a computer processor, cause the processor to perform an intra prediction method. The method includes: constructing, based on a current template type and template correlations of a current sub-partition in a coding unit, a target IPM candidate set corresponding to the current sub-partition; and performing intra prediction on the current sub-partition based on an IPM in the target IPM candidate set.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An intra prediction method, comprising:
constructing, based on a current template type and template correlations of a current sub-partition in a coding unit, a target intra prediction mode (IPM) candidate set corresponding to the current sub-partition; and
performing intra prediction on the current sub-partition based on an IPM in the target IPM candidate set.

2. The intra prediction method of claim 1, wherein constructing, based on the current template type and the template correlations of the current sub-partition in the coding unit, the target IPM candidate set corresponding to the current sub-partition comprises:
acquiring a first derived IPM set derived based on template information;
determining a template correlation between a template type corresponding to each derived IPM in the first derived IPM set and the current template type of the current sub-partition in the coding unit;
selecting, based on the template correlation, a candidate IPM from the first derived IPM set; and
constructing, based on the candidate IPM, the target IPM candidate set corresponding to the current sub-partition.

3. The intra prediction method of claim 2, wherein the first derived IPM set comprises at least one of a first-type IPM, a second-type IPM, or a third-type IPM; the first-type IPM is a prediction mode derived from a first template region and a second template region of the coding unit; the second-type IPM is a prediction mode derived from the first template region of the coding unit; and the third-type IPM is a prediction mode derived from the second template region of the coding unit.

4. The intra prediction method of claim 2, wherein selecting, based on the template correlation, the candidate IPM from the first derived IPM set comprises the following:
in response to the current template type being a first-type template, the candidate IPM comprises at least one of a first-type IPM, a second-type IPM, or a third-type IPM;
in response to the current template type being a second-type template, the candidate IPM comprises at least one of a first-type IPM or a second-type IPM; or
in response to the current template type being a third-type template, the candidate IPM comprises at least one of a first-type IPM or a third-type IPM.

5. The intra prediction method of claim 1, wherein constructing, based on the current template type and the template correlations of the current sub-partition in the coding unit, the target IPM candidate set corresponding to the current sub-partition comprises:
acquiring a second derived IPM set from a pre-created initial IPM candidate set;
determining a template correlation between a template type corresponding to each derived IPM in the second derived IPM set and the current template type of the current sub-partition in the coding unit; and
sorting, based on the template correlation, all derived IPMs in the second derived IPM set to obtain the target IPM candidate set corresponding to the current sub-partition.

6. The intra prediction method of claim 5, wherein the second derived IPM set comprises at least one of a first-type IPM, a second-type IPM, or a third-type IPM; the first-type IPM is a prediction mode derived from a first template region and a second template region of the coding unit; the second-type IPM is a prediction mode derived from the first template region of the coding unit; and the third-type IPM is a prediction mode derived from the second template region of the coding unit.

7. The intra prediction method of claim 5, wherein in response to the current template type being a first-type template, determining the template correlation between the template type corresponding to each derived IPM in the second derived IPM set and the current template type of the current sub-partition in the coding unit comprises:
determining respective template region areas occupied by a second template region and a third template region in the first-type template; and
determining, based on the template region areas, a template correlation between a second-type template and the current template type and a template correlation between a third-type template and the current template type.

8. The intra prediction method of claim 5, wherein sorting, based on the template correlation, all the derived IPMs in the second derived IPM set to obtain the target IPM candidate set corresponding to the current sub-partition comprises:
sorting, based on the template correlation, all the derived IPMs in the second derived IPM set in descending order to obtain the target IPM candidate set corresponding to the current sub-partition.

9. A communication device, comprising a memory and at least one processor, wherein
the memory is configured to store at least one program; and
the at least one program, when executed by the at least one processor, causes the at least one processor to perform the intra prediction method of any one of claims 1 to 8.

10. A storage medium storing a computer program which, when executed by a processor, causes the processor to perform the intra prediction method of any one of claims 1 to 8.
